# EUROPÄISCHE PATENTANMELDUNG

(11) **EP 4 145 609 A1**
(43) Veröffentlichungstag der Anmeldung: **08.03.2023**
(21) Anmeldenummer: 22192716.3
(22) Anmeldetag: 30.08.2022
(51) Int. Cl.: H01M 50/273, B60K 1/04, H01M 50/278, H01M 50/284, H01M 50/287, H01M 50/298, H01M 50/358, H01M 50/502, H01M 50/51

(54) **ABDECKVORRICHTUNG FÜR EIN BATTERIEMODUL**

(30) Priorität: 02.09.2021 DE 102021122698
(71) Anmelder: MAN Truck & Bus SE, 80995 München (DE)
(72) Erfinder: Burkhardt, Wolfgang, 80995 München (DE)
(74) Vertreter: v. Bezold & Partner Patentanwälte - PartG mbB

(57) **Zusammenfassung**

Die Erfindung betrifft eine Abdeckvorrichtung (1) für ein Batteriemodul (2). Das Batteriemodul (2) weist mehrere Zellen zur Speicherung elektrischer Energie, vorzugsweise zur Speicherung elektrischer Traktionsenergie eines Fahrzeugs, auf. Die Abdeckvorrichtung (1) umfasst einen Moduldeckel (3) und mindestens eine durch den Moduldeckel (3) gehalterte und verlaufende Leiterbahn (4, 5) zur elektrischen Kontaktierung der Zellen, die abschnittsweise von Material des Moduldeckels (3) umgeben ist und an Abschnitten, die elektrische Kontaktstellen (12) für die Zellen ausbilden, freiliegt. Die Erfindung betrifft ferner eine Energiespeichervorrichtung (11) aufweisend die Abdeckvorrichtung (1) und das Batteriemodul (2) sowie ein Fahrzeug, vorzugsweise Nutzfahrzeug, aufweisend die Abdeckvorrichtung (1).

## Beschreibung

Die Erfindung betrifft eine Abdeckvorrichtung für ein Batteriemodul. Die Erfindung betrifft ferner eine Energiespeichervorrichtung aufweisend die Abdeckvorrichtung und das Batteriemodul sowie ein Fahrzeug, vorzugsweise Nutzfahrzeug, aufweisend die Abdeckvorrichtung.

Aus der Praxis bekannte Fahrzeugbatterien, wie sie z. B. als Energiespeicher bzw. als Traktionsbatterie in Hybridfahrzeugen oder Elektrofahrzeugen zum Einsatz kommen, verfügen typischerweise über ein Batteriepack, in dem mehrere stapelartig angeordnete Batterie-Speicherzellen angeordnet sind. Die Batterie-Speicherzellen sind dabei zu einem oder mehreren Modulen zusammengefasst. Die elektrische Kontaktierung mehrerer hintereinander angeordneter Zellpins der Batterie-Speicherzellen eines Moduls erfolgt über eine separate Stromsammelschiene aus elektrisch leitendem Material. Zum Schutz vor Beschädigung und Verschmutzung der Fahrzeugbatterie weist das Modul meist eine Abdeckung auf, mittels derer die Stromsammelschiene und die Batterie-Speicherzellen überdeckt werden.

Bekannte Fahrzeugbatterien weisen demnach in nachteilhafter Weise meist eine relativ hohe Teileanzahl auf. Es resultiert ein erhöhter technischer Aufwand. Der Montageprozess ist dadurch relativ kompliziert, was Montagefehler begünstigt. Ferner liegen Hochvoltkomponenten zumindest im Montageprozess oft frei, sodass die Gefahr elektrischer Schläge für Umstehende durch ein unabsichtliches Berühren der freiliegenden Hochvoltkomponenten gegeben ist.

Die Aufgabe der vorliegenden Erfindung ist es, eine Technik zur Abdeckung eines Batteriemoduls bereitzustellen, mit der Nachteile bekannter Ansätze zur Abdeckung eines Batteriemoduls vermieden werden können. Die Aufgabe der Erfindung ist es insbesondere, den technischen Aufwand und die Gefahr für Montagefehler und die Verletzungsgefahr durch Stromschläge im Montageprozess zu reduzieren.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Ein Grundgedanke der Erfindung besteht darin, dass eine Leiterbahn zur elektrischen Kontaktierung der Zellen eines Batteriemoduls in dem Moduldeckel integriert bzw. fest verbaut ist und lediglich abschnittsweise freiliegt. Dies bietet den Vorzug einer geringeren Teileanzahl und damit eines erleichterten Montage- und Demontagevorgangs. Ferner werden die Hochvoltkomponenten bei Demontage, insbesondere bei Abnahme des Moduldeckels, elektrisch voneinander getrennt, was die Gefahr von Stromschlägen im Montageprozess verringert.

Gemäß einem ersten allgemeinen Gesichtspunkt wird eine Abdeckvorrichtung für ein Batteriemodul bereitgestellt. Das Batteriemodul weist mehrere Zellen zur Speicherung elektrischer Energie auf, vorzugsweise zur Speicherung elektrischer Traktionsenergie eines Fahrzeugs und/oder zur Speicherung von für den Betrieb elektrischer Verbraucher wie z. B. einer Heizung oder einer Beleuchtung eines Fahrzeuginnenraums bestimmter elektrischer Energie. Die Abdeckvorrichtung umfasst einen Moduldeckel und mindestens eine Leiterbahn zur elektrischen Kontaktierung der Zellen. Die mindestens eine Leiterbahn verläuft durch den Moduldeckel und ist durch den Moduldeckel gehaltert. Die mindestens eine Leiterbahn ist abschnittsweise von Material des Moduldeckels umgeben. An Abschnitten, die elektrische Kontaktstellen für die Zellen ausbilden, liegt die mindestens eine Leiterbahn jedoch frei.

In anderen Worten ist die Leiterbahn also in den Moduldeckel integriert und/oder fest verbaut. Die Leiterbahn weist vorzugsweise ein elektrisch leitendes Material auf, wie beispielsweise Kupfer. Der Moduldeckel weist vorzugsweise ein elektrisch isolierendes Material auf, wie beispielsweise Kunststoff.

Der Begriff der Leiterbahn, wie er im Sinn der vorliegenden Erfindung verstanden wird, umfasst dabei auch den oft synonym verwendeten Begriff "Busbar".

Es ist denkbar, dass die Abschnitte, die die elektrischen Kontaktstellen für die Zellen ausbilden, Bohrungen aufweisen, deren Abmessungen den Abmessungen der Pins der Zellen entsprechen. Die elektrische Kontaktierung zu den Zellen kann dann beispielsweise dadurch umgesetzt sein, dass die Pins durch die Bohrungen der Leiterbahn geführt sind und optional mit Muttern auf der den Speicherzellen abgewandten Seite gesichert sind.

Die vorgeschlagene Abdeckvorrichtung birgt gegenüber den bekannten Lösungen mehrere Vorteile. Durch die Integration der Leiterbahn in den Moduldeckel wird die Teilanzahl reduziert, was den technischen Aufwand verringert. Insbesondere bei der Montage und Demontage kann der Moduldeckel und die Leiterbahn als eine Baueinheit aufgesetzt und abgenommen werden, was den Montage- und Demontageprozess insgesamt vereinfacht und die Gefahr für Montagefehler verringert. Die vorgeschlagene Abdeckvorrichtung dient zusätzlich der Gefahrenvermeidung. Ohne Deckel, z. B. bei Demontage, werden die elektrischen Verbindungen getrennt, mit dem Effekt, dass kein "Hochvolt-System" mehr vorliegt und die Gefahr von Stromschlägen für Umstehende bei der Montage und Demontage reduziert wird.

Gemäß einer besonders vorteilhaften Ausführungsform kann der Moduldeckel einen Hohlraum zur Halterung der mindestens einen Leiterbahn ausbilden. Alternativ oder zusätzlich kann der Moduldeckel eine Aufnahme zur Halterung der mindestens einen Leiterbahn ausbilden. Vorzugsweise ist der Hohlraum oder die Aufnahme formkorrespondierend zur einer Außenkontur der Leiterbahn ausgebildet. Es ist denkbar, dass das durch den Hohlraum eingeschlossene Innenvolumen dem Volumen der Leiterbahn entspricht. Die mindestens eine Leiterbahn kann dadurch beispielsweise formschlüssig im Moduldeckel gehaltert sein. Ferner ist denkbar, dass die mindestens eine Leiterbahn in den Hohlraum gepresst ist. Vorzugsweise ist die Leiterbahn derart im Moduldeckel gehaltert, dass sie in Bezug auf den Moduldeckel eine definierte Position einnimmt und bei einem Aufsetzen der Abdeckvorrichtung auf das Batteriemodul die freiliegenden Abschnitte der Leiterbahn, die die elektrische Kontaktstellen für die Zellen ausbilden, die Pins der Zellen sicher kontaktieren. Dies vereinfacht den Montage- und Demontageprozess weiter und senkt die Gefahr von Montagefehlern weiter.

Gemäß einem weiteren Aspekt kann die mindestens eine Leiterbahn durch einen als Hinterschneidung ausgebildeten Hohlraum des Moduldeckels verlaufen. Der Hohlraum kann die Leiterbahn also beispielsweise derart umschließen, dass die Leiterbahn nicht zerstörungsfrei aus dem Hohlraum entnehmbar ist. Der Begriff der Hinterschneidung kennzeichnet dabei also einen Hohlraum, für dessen Fertigung beispielsweise mittels eines Gießverfahrens die Verwendung eines verlorenen Kerns notwendig wäre. Die Leiterbahn wird vorteilhaft besonders sicher im Moduldeckel gehaltert.

Gemäß einer weiteren Ausführungsform kann der Moduldeckel als Spritzgussteil, vorzugsweise Kunststoff-Spritzgussteil, ausgebildet sein und die mindestens eine Leiterbahn zumindest abschnittsweise durch Umspritzung in den Moduldeckel integriert sein. Dies bietet den Vorzug, dass die Abdeckvorrichtung mit geringem technischen Aufwand fertigbar ist. Ferner kann der Moduldeckel die Funktion eines elektrischen Isolators übernehmen.

Gemäß einem weiteren Aspekt kann die Abdeckvorrichtung einen Entgasungskanal zum Abführen von aus dem Batteriemodul entweichendem Gas aufweisen. Vorzugsweise ist der Entgasungskanal in den Moduldeckel integriert. Der Entgasungskanal kann mindestens eine modulseitige Einlassöffnung aufweisen. Der Entgasungskanal kann zum Abführen von in den Entgasungskanal eingetretenen Gases beispielsweise in seiner Längsrichtung durchströmbar sein. Weiterhin kann der Entgasungskanal als Entgasungsrohr und/oder Entgasungsleitung ausgebildet sein, über den entweichendes Gas optional in die Umgebung abgeführt werden kann. Dadurch wird die Teileanzahl und den Montageaufwand sowie die Gefahr für Montagefehler weiter reduziert.

Gemäß einer Weiterbildung des letztgenannten Aspekts kann der Entgasungskanal aus einem metallischen Werkstoff, beispielsweise Stahl, gefertigt sein. Ferner kann der Entgasungskanal durch Umspritzung mit einem Kunststoffmaterial des Moduldeckels in den Moduldeckel integriert sein. Der Entgasungskanal kann dabei in vorteilhafter Weise auch höheren Temperaturen standhalten und ist gleichzeitig mit relativ geringem technischen Aufwand fertigbar.

Gemäß einer Weiterbildung der letztgenannten beiden Aspekte kann der Entgasungskanal ein thermisch beständigeres Material aufweisen als der Moduldeckel. Beispielsweise kann das Material des Entgasungskanals unter Temperatureinwirkung eine niedrigere Temperaturausdehnung und/oder eine größere Formtreue und/oder einen höheren Schmelzpunkt und/oder ein späteres Versagen der Funktion und/oder eine niedrigere Entflammbarkeit und/oder eine niedrigere Brennbarkeit als das Material des Moduldeckels aufweisen. Denkbare Materialkombinationen sind beispielsweise Stahl für den Entgasungskanal und Kunststoff für den Moduldeckel. Dies erhöht die Lebensdauer der Abdeckvorrichtung.

Gemäß einer weiteren Ausführungsform kann die Abdeckvorrichtung eine randseitig an der Abdeckvorrichtung umlaufende Versteifungsrippe aufweisen. Die Versteifungsrippe kann beispielsweise als randseitige Erhebung ausgebildet sein. Vorzugsweise erstreckt sich die Versteifungsrippe quer, weiter vorzugsweise orthogonal zur durch den Moduldeckel definierten Ebene. Es ist denkbar, dass sich die Versteifungsrippe von der, dem Batteriemodul zugewandten Seite des Moduldeckels bis zu der dem Batteriemodul abgewandten Seite des Moduldeckels erstreckt. Vorteilhaft ist es, wenn die Versteifungsrippe einen T-förmigen Querschnitt hat. Dadurch wird die Steifigkeit der Abdeckvorrichtung erhöht.

Gemäß einer Weiterbildung des letztgenannten Aspekts kann der Moduldeckel ein Spritzgussteil sein und die Versteifungsrippe und der Moduldeckel ein einstückiges Bauteil ausbilden. Dies bietet Vorteile in Bezug auf die Herstellungskosten und das Gewicht.

Alternativ kann der Moduldeckel an einem seitlichen Randbereich einen Schlitz und/oder eine Nut aufweisen, in dem und/oder der die Versteifungsrippe befestigt ist. Denkbar ist, dass die Versteifungsrippe in den Schlitz und/oder die Nut gepresst und/oder geklebt ist. Vorzugsweise ist die Versteifungsrippe durch Umspritzung in dem Schlitz und/oder der Nut befestigt. Die Versteifungsrippe umfasst in dieser Ausführungsform vorzugsweise einen metallischen Werkstoff, bspw. Aluminium oder Stahl. Dies erhöht die Steifigkeit der Abdeckvorrichtung weiter.

Gemäß einer weiteren Ausführungsform kann die Abdeckvorrichtung mindestens eine auf der dem Batteriemodul abgewandten Seite des Moduldeckels angeordnete Versteifungsrippe aufweisen. Vorzugsweise verläuft die Versteifungsrippe quer zu der mindestens einen Leiterbahn und/oder zum Entgasungskanal. Auch diese Versteifungsrippe umfasst vorzugsweise einen metallischen Werkstoff, bspw. Aluminium oder Stahl.

Gemäß einem weiteren Aspekt kann die mindestens eine Leiterbahn mehrere Leiterbahnen zur elektrischen Reihenschaltung der Zellen umfassen.

Die Erfindung betrifft ferner eine Energiespeichervorrichtung zur Speicherung elektrischer Energie aufweisend die Abdeckvorrichtung, wie sie in diesem Dokument beschrieben ist, und das Batteriemodul. Das Batteriemodul weist zumindest einen Batteriezellenstapel aus mehreren stapelartig hintereinander angeordneten Zellen auf. Die Abdeckvorrichtung ist im montierten Zustand auf dem Batteriemodul angeordnet. Zur elektrischen Reihenschaltung der Zellen des Batteriezellenstapels sind die mehreren Leiterbahnen an ihren elektrischen Kontaktstellen mit den Zellen elektrisch kontaktiert. Es ist denkbar, dass die Zellen als prismatische Speicherzellen oder Pouch-Speicherzellen ausgebildet sind. Gemäß einer besonders vorteilhaften Ausführungsform kann die Energiespeichervorrichtung Eigenfrequenzen aufweisen, die oberhalb 160Hz liegen. Alternativ oder zusätzlich kann die Anzahl und/oder Abmessungen und/oder ein Material der Versteifungsrippen gemäß einer der drei vorgenannten Ausführungsformen mit einer Versteifungsrippe so gewählt sein, dass die Energiespeichervorrichtung Eigenfrequenzen aufweist, die oberhalb 160 Hz liegen. Vorzugsweise kann die Anzahl und/oder Abmessungen und/oder ein Material der Versteifungsrippen so gewählt sein, dass die Schwingungseigenmoden der Energiespeichervorrichtung über den kritischen Bereich für den Einsatz in Fahrzeugen liegen. In anderen Worten können kritische Anregungsbereiche, insbesondere Resonanzbereiche der Energiespeichervorrichtung, bei Anregung der Energiespeichervorrichtung, bspw. durch den Einsatz des Energiespeichers in einem Fahrzeug, vermieden werden. Die Lebensdauer der Energiespeichervorrichtung kann dadurch erhöht werden.

Die Erfindung betrifft ferner ein Fahrzeug, vorzugsweise Nutzfahrzeug, aufweisend eine Abdeckvorrichtung wie vorstehend beschrieben oder die Energiespeichervorrichtung wie vorstehend beschrieben.

Das Fahrzeug ist vorzugsweise zumindest teilweise elektrisch angetrieben. Vorzugsweise handelt es sich bei dem Fahrzeug um ein Kraftfahrzeug, beispielsweise um einen Personenkraftwagen (PKW) oder um ein Nutzfahrzeug. In letztgenanntem Fall kann es sich bei dem Fahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und oder einen Sattelzug handeln, der zumindest teilweise elektrisch angetrieben ist. Es ist jedoch auch denkbar, dass das Fahrzeug ein Schienenfahrzeug oder Flugzeug ist.

Ferner ist es ebenso denkbar, dass die Erfindung als stationäre Energiespeichervorrichtung oder Batteriespeicher ausgebildet ist oder dass die Energiespeichervorrichtung Teil einer stationären, also nicht-mobilen, Vorrichtung ist. Ein Beispiel hierfür wäre eine fest installierte Energiespeichervorrichtung, beispielsweise im Kombination mit einer Solar- oder Windkraftanlage.

Die zuvor beschriebenen bevorzugten Ausführungsformen und Merkmale der Erfindung sind beliebig miteinander kombinierbar. Zur Vermeidung von Wiederholungen sollen rein vorrichtungsgemäß offenbarte Merkmale auch als verfahrensgemäß offenbart gelten und beanspruchbar sein.

Einzelheiten und Vorteile der Erfindung werden im Folgenden unter Bezug auf die beigefügte Zeichnung beschrieben. Es zeigen:
- Figur 1: eine seitliche Schnittansicht (Teildarstellung) einer Energiespeichervorrichtung gemäß einer Ausführungsform der Erfindung;
- Figur 2: eine schematische isometrische Schnittansicht (Teildarstellung) einer Abdeckvorrichtung gemäß einer Ausführungsform der Erfindung.

Gleiche oder funktional äquivalente Elemente sind in allen Figuren mit denselben Bezugszeichen bezeichnet und sind zum Teil nicht gesondert beschrieben.

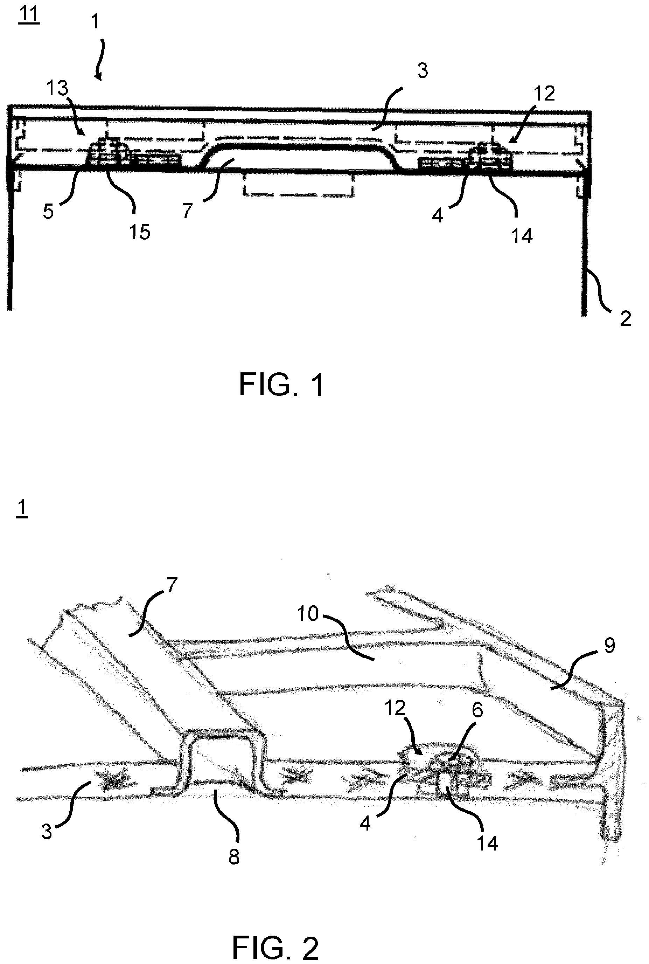

Figur 1 zeigt eine seitliche Schnittansicht einer Energiespeichervorrichtung 11 gemäß einer Ausführungsform der Erfindung. Die Energiespeichervorrichtung 11 weist ein Batteriemodul 2 auf, das nur teilweise dargestellt ist. Das Batteriemodul 2 weist zumindest einen Batteriezellenstapel aus mehreren stapelartig hintereinander angeordneten Zellen auf, von denen in Figur 1 nur eine Zelle angedeutet ist. Die Zellen sind in der gezeigten Ausführungsform zur Speicherung elektrischer Traktionsenergie eines Fahrzeugs ausgebildet, sind darauf jedoch nicht beschränkt. Die Energiespeichervorrichtung 11 eignet sich natürlich ebenso zur Speicherung von elektrischer Energie, die auf eine andere Weise erzeugt wurde, wie beispielsweise durch Windkraft oder z. B. zur Speicherung elektrischer Energie, die für den Betrieb elektrischer Verbraucher genutzt wird, z. B. zum Heizen oder zur Beleuchtung eines Fahrzeuginnenraums.

Jede Zelle weist einen Pluspol 14 und einen Minuspol 15 auf. Über den Pluspol 14 und den Minuspol 15 kann den Zellen elektrische Energie zugeführt und entnommen werden.

Zur Ausbildung einer Reihenschaltung der Zellen erfolgt die Verbindung der Pole 14, 15 der einzelnen Zellen alternierend. Der Pluspol einer ersten Zelle wird mit dem Pluspol 14 einer zweiten Zelle verbunden. Der Minuspol 15 der zweiten Zelle wird mit dem Minuspol einer dritten Zelle verbunden usw. Dadurch summieren sich die Zellspannungen. Die erste Leiterbahn 4 und die zweite Leiterbahn 5 bestehen aus einem elektrisch leitenden Material, hier Kupfer.

Das Batteriemodul 2 ist durch eine Abdeckvorrichtung 1 abgedeckt. Zur Reduzierung der Teilezahl, des technischen Aufwands, der Vermeidung von Montagefehlern und zur Reduzierung der Gefahr für Stromschläge sind die erste Leiterbahn 4 und die zweite Leiterbahn 5 integraler Bestandteil der Abdeckvorrichtung 1.

Die Abdeckvorrichtung 1 umfasst einen Moduldeckel 3 und die erste Leiterbahn 4 und die zweite Leiterbahn 5. In anderen, hier nicht gezeigten Ausführungsformen ist auch denkbar, dass die Abdeckvorrichtung 1 lediglich eine Leiterbahn oder mehr als zwei Leiterbahnen umfasst.

Die erste Leiterbahn 4 und die zweite Leiterbahn 5 sind durch den Moduldeckel 3 gehaltert und verlaufen durch den Moduldeckel 3. Abschnittsweise sind die erste Leiterbahn 4 und die zweite Leiterbahn 5 von Material des Moduldeckels 3 umgeben. An Abschnitten, die elektrische Kontaktstellen 12, 13 für die Zellen ausbilden, liegen die erste Leiterbahn 4 und die zweite Leiterbahn 5 jedoch frei. In anderen Worten liegen nur die tatsächlich zur elektrischen Kontaktierung notwendigen Abschnitte der Leiterbahnen 4, 5 frei. Die erste Leiterbahn 4 und die zweite Leiterbahn 5 sind also in den Moduldeckel 3 integriert und/oder fest verbaut.

Der Moduldeckel 3 bildet einen ersten Hohlraum und eine Aufnahme zur Halterung der ersten Leiterbahn 4 aus, der formkorrespondierend zur einer Außenkontur der Leiterbahn 4 ausgebildet ist. Ferner bildet der Moduldeckel 3 einen zweiten Hohlraum und eine Aufnahme zur Halterung der zweiten Leiterbahn 5 aus, der ebenfalls formkorrespondierend zur einer Außenkontur der Leiterbahn 5 ausgebildet ist.

Sowohl der erste als auch der zweite Hohlraum sind optional als Hinterschneidung ausgebildet. Die erste Leiterbahn 4 und die zweite Leiterbahn 5 können also aus dem Moduldeckel 3 nicht zerstörungsfrei entfernt werden.

Dies wird dadurch ermöglicht, dass der Moduldeckel 3 als Kunststoff-Spritzgussteil ausgebildet ist. Die erste Leiterbahn 4 und die zweite Leiterbahn 5 sind abschnittsweise durch Umspritzung in den Moduldeckel 3 integriert.

Die Abdeckvorrichtung 1 kann während der Montage bzw. Demontage als Ganzes aufgesetzt bzw. entfernt werden. Dies reduziert die Gefahr von Fehlern beim Montage- bzw. Demontagevorgang. Wird die Abdeckvorrichtung 1 abgenommen, werden die Hochvoltkomponenten des Batteriezellenstapels 2 elektrisch voneinander getrennt, sodass die Gefahr von Stromschlägen für Umstehende reduziert wird. Gleiches gilt auch für den Montagevorgang.

Der Moduldeckel 3 ist als Kunststoff-Spritzgussteil ausgebildet, also einem elektrisch isolierenden Material, sodass der Moduldeckel 3 gleichzeitig die Funktion eines elektrischen Isolators übernimmt.

Alterungsbedingt oder aufgrund von Beschädigungen kann es dazu kommen, dass den Zellen heißes Gas entweicht. Zum Abführen dieses aus dem Batteriemodul 2 entweichenden Gases weist die Abdeckvorrichtung 1 einen Entgasungskanal 7 auf. Der Entgasungskanal 7 ist ebenfalls in den Moduldeckel 3 integriert und weist eine modulseitige Einlassöffnung 8 auf. In einer weiteren, hier nicht dargestellten, Ausführungsform ist es denkbar, dass der Entgasungskanal 7 mehrere Einlassöffnungen 8 aufweist, die vorzugsweise jeweils über einer der Zellen angeordnet sind. In der gezeigten Ausführungsform ist der Entgasungskanal 7 mit dem Moduldeckel als einstückig-integrales Kunststoff-Spritzgussteil gefertigt. Das Entgasungsrohr 7 weist in Höhenrichtung eine kleinere räumliche Ausdehnung auf als der Moduldeckel 3.

Figur 2 zeigt eine schematische isometrische Schnittansicht einer Abdeckvorrichtung 1 gemäß einer Ausführungsform der Erfindung. Die Abdeckvorrichtung 1 ist nur teilweise dargestellt.

Im Unterschied zur Ausführungsform der Figur 1 ist der Entgasungskanal 7 nicht mit dem Moduldeckel 3 einstückig ausgebildet, sondern als eigenständiges Stahlbauteil ausgebildet, das durch Umspritzung mit einem Kunststoffmaterial des Moduldeckels 3 in den Moduldeckel 3 integriert ist. Damit weist der Entgasungskanal 7 ein thermisch beständigeres Material auf als der Kunststoff-Moduldeckel 3. Das Material des Entgasungskanals 7 weist beispielsweise unter Temperatureinwirkung eine niedrigere Temperaturausdehnung und eine größere Formtreue und einen höheren Schmelzpunkt auf, wodurch ein späteres Versagen der Funktion vermieden wird. Zudem weist das Material des Entgasungskanals 7 eine niedrigere Entflammbarkeit und/oder eine niedrigere Brennbarkeit auf als das Material des Moduldeckels 3. Ferner weist das Entgasungsrohr 7 in Höhenrichtung eine größere räumliche Ausdehnung auf als der Moduldeckel 3.

Auf der dem Batteriemodul 2 abgewandten Seite des Moduldeckels 3 weist die Abdeckvorrichtung 1 Versteifungsrippen 9, 10 auf.

Die Versteifungsrippe 9 hat einen T-förmigen Querschnitt, verläuft randseitig um die Abdeckvorrichtung 1 und ist aus einem festeren und steiferen Material als der Moduldeckel 3 gefertigt. Der Moduldeckel 3 weist an einem seitlichen Randbereich einen Schlitz auf, in dem die Versteifungsrippe 9 durch Umspritzung befestigt ist. In einer weiteren, hier nicht dargestellten, Ausführungsform ist es alternativ dazu denkbar, dass der Moduldeckel 3 ein Spritzgussteil ist und die Versteifungsrippe 9 und der Moduldeckel 3 ein einstückiges Bauteil ausbilden. Die Versteifungsrippe 10 ist ebenfalls auf der dem Batteriemodul 2 abgewandten Seite des Moduldeckels 3 angeordnet und verläuft quer zur Leiterbahn 4 bzw. quer zum Entgasungskanal 7.

Anzahl, Abmessungen und ein Material der Versteifungsrippen 9, 10 sind so gewählt, dass die mit dem Batteriemodul 2 zu der Energiespeichervorrichtung 11 zusammenbaute Abdeckvorrichtung 1 Eigenfrequenzen aufweist, die oberhalb 160 Hz liegen.

Die elektrische Kontaktierung des Batteriemoduls 3 kann beispielsweise derart erfolgen, dass Zellpins der Zellen an den freiliegenden, die elektrische Kontaktstellen 12 ausbildenden Abschnitten durch Bohrungen der Leiterbahn 4 geführt werden und von der dem Batteriemodul 2 abgewandten Seite mit jeweils einer Mutter 6 gesichert werden.

Obwohl die Erfindung unter Bezugnahme auf bestimmte Ausführungsbeispiele beschrieben worden ist, ist es für den Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Abdeckvorrichtung
- 2: Batteriemodul
- 3: Moduldeckel
- 4: Erste Leiterbahn
- 5: Zweite Leiterbahn
- 6: Mutter
- 7: Entgasungskanal
- 8: Einlassöffnung
- 9-10: Versteifungsrippe
- 11: Energiespeichervorrichtung
- 12: Elektrische Kontaktstelle der ersten Leiterbahn
- 13: Elektrische Kontaktstelle der zweiten Leiterbahn
- 14: Pluspol des Batteriemoduls
- 15: Minuspol des Batteriemoduls

## Patentansprüche

1. Abdeckvorrichtung (1) für ein Batteriemodul (2), wobei das Batteriemodul (2) mehrere Zellen zur Speicherung elektrischer Energie, vorzugsweise zur Speicherung elektrischer Traktionsenergie eines Fahrzeugs, aufweist, wobei die Abdeckvorrichtung (1) umfasst:
einen Moduldeckel (3) und mindestens eine durch den Moduldeckel (3) gehalterte und verlaufende Leiterbahn (4, 5) zur elektrischen Kontaktierung der Zellen, die abschnittsweise von Material des Moduldeckels (3) umgeben ist und an Abschnitten, die elektrische Kontaktstellen (12) für die Zellen ausbilden, freiliegt.

2. Abdeckvorrichtung (1) nach Anspruch 1, wobei der Moduldeckel (3) einen Hohlraum und/oder eine Aufnahme zur Halterung der mindestens einen Leiterbahn (4, 5) ausbildet, die vorzugsweise formkorrespondierend zur einer Außenkontur der Leiterbahn (4, 5) ausgebildet ist.

3. Abdeckvorrichtung (1) nach Anspruch 1 oder 2, wobei die mindestens eine Leiterbahn (4, 5) durch einen als Hinterschneidung ausgebildeten Hohlraum des Moduldeckels (3) verläuft.

4. Abdeckvorrichtung (1) nach einem der vorhergehenden Ansprüche, wobei der Moduldeckel (3) als Spritzgussteil, vorzugsweise Kunststoff-Spritzgussteil, ausgebildet ist und die mindestens eine Leiterbahn (4, 5) zumindest abschnittsweise durch Umspritzung in den Moduldeckel (3) integriert ist.

5. Abdeckvorrichtung (1) nach einem der vorhergehenden Ansprüche, aufweisend einen, vorzugsweise in den Moduldeckel (3) integrierten, Entgasungskanal (7) zum Abführen von aus dem Batteriemodul (2) entweichendem Gas, der mindestens eine modulseitige Einlassöffnung (8) aufweist.

6. Abdeckvorrichtung (1) nach Anspruch 5, wobei der Entgasungskanal (7) aus einem metallischen Werkstoff gefertigt ist und durch Umspritzung mit einem Kunststoffmaterial des Moduldeckels (3) in den Moduldeckel (3) integriert ist.

7. Abdeckvorrichtung (1) nach Anspruch 5 oder 6, wobei der Entgasungskanal (7) ein thermisch beständigeres Material aufweist als der Moduldeckel (3), wobei das Material des Entgasungskanals (7) beispielsweise unter Temperatureinwirkung eine niedrigere Temperaturausdehnung und/oder eine größere Formtreue und/oder einen höheren Schmelzpunkt und/oder ein späteres Versagen der Funktion und/oder eine niedrigere Entflammbarkeit und/oder einen niedrigere Brennbarkeit aufweist als das Material des Moduldeckels (3).

8. Abdeckvorrichtung (1) nach einem der vorhergehenden Ansprüche, aufweisend eine randseitig an der Abdeckvorrichtung (1) umlaufende Versteifungsrippe (9).

9. Abdeckvorrichtung (1) nach Anspruch 8, wobei der Moduldeckel (3)
a) ein Spritzgussteil ist und die Versteifungsrippe (9) und der Moduldeckel (3) ein einstückiges Bauteil ausbilden; oder
b) an einem seitlichen Randbereich einen Schlitz und/oder Nut aufweist, in dem und/oder der die Versteifungsrippe (9) befestigt ist, weiter vorzugsweise durch Umspritzung, befestigt ist.

10. Abdeckvorrichtung (1) nach einem der vorhergehenden Ansprüche, ferner aufweisend mindestens eine auf der dem Batteriemodul (2) abgewandten Seite des Moduldeckels (3) angeordnete, vorzugsweise quer zu der mindestens einen Leiterbahn (4, 5) verlaufende, Versteifungsrippe (10).

11. Abdeckvorrichtung (1) nach einem der vorhergehenden Ansprüche, wobei die mindestens eine Leiterbahn (4, 5) mehrere Leiterbahnen (4, 5) zur elektrischen Reihenschaltung der Zellen umfasst.

12. Energiespeichervorrichtung (11) zur Speicherung elektrischer Energie aufweisend
a) die Abdeckvorrichtung (1) nach Anspruch 11, und
b) das Batteriemodul (2) aufweisend zumindest einen Batteriezellenstapel aus mehreren stapelartig hintereinander angeordneten Zellen,
c) wobei die Abdeckvorrichtung (1) auf dem Batteriemodul (2) angeordnet ist und zur elektrischen Reihenschaltung der Zellen des Batteriezellenstapels (2) die mehreren Leiterbahnen (4, 5) an ihren elektrischen Kontaktstellen (12, 13) mit den Zellen elektrisch kontaktiert sind.

13. Energiespeichervorrichtung (11) nach Anspruch 12, wobei die Energiespeichervorrichtung (11) Eigenfrequenzen aufweist, die oberhalb 160Hz liegen und/oder wobei die Anzahl und/oder Abmessungen und/oder ein Material der Versteifungsrippen (9; 10) gemäß Anspruch 8, 9 oder 10 so gewählt sind, dass die Energiespeichervorrichtung (11) Eigenfrequenzen aufweist, die oberhalb 160 Hz liegen.

14. Fahrzeug, vorzugsweise Nutzfahrzeug, aufweisend eine Abdeckvorrichtung (1) nach einem der Ansprüche 1 bis 12 oder die Energiespeichervorrichtung (11) nach Anspruch 12 oder 13.
